# EUROPEAN PATENT APPLICATION

(11) **EP 1 759 929 A1**
(43) Date of publication of application: **07.03.2007**
(21) Application number: 05743897.0
(22) Date of filing: 30.05.2005
(51) Int. Cl.: B60R 16/02, B60J 5/00

(54) **POWER SUPPLY SYSTEM FOR VEHICLE**

(30) Priority: 31.05.2004 JP 2004160644; 24.06.2004 JP 2004185917; 30.06.2004 JP 2004194674
(71) Applicant: The Furukawa Electric Co., Ltd., Chiyoda-ku Tokyo 100-8322 (JP)
(72) Inventor: HARA, Shoji;, hi 2-chome, Chiyoda-ku, Tokyo 1008322; (JP); ICHII, Eiji;, hi 2-chome, Chiyoda-ku, Tokyo 1008322; (JP); TAKAHASHI, Hiroaki;, hi 2-chome, Chiyoda-ku, Tokyo 1008322; (JP); ABE, Ken;, hi 2-chome, Chiyoda-ku, Tokyo 1008322; (JP)
(74) Representative: Feray, Valérie
(86) International application number: PCT/JP2005/009855
(87) International publication number: WO 2005/115799

(57) **Abstract**

A power feed system for a vehicle provided with a plurality of nodes (4a, 4b, 4c) provided with a load control portion (9) for controlling an electric load disposed at each portion of a vehicle, respectively, a power line (1) for supplying power to each node, and a multiplex transmission line (2) connecting each node to each other, comprising an abnormal current detection portion (5) disposed in a line for receiving power feed from the power line at each node for detecting abnormality of a load current, a detection signal generation portion (10) that starts to receive power when abnormality is detected at the abnormal current detection portion and sends a weak current as an output signal, a diagnostic signal line (3) in common to each node, connected to the detection signal generation portion for transmitting the signal from the detection signal generation portion, and a switching portion (6) for switching the power feed from the power line to the load control portion or the detection signal generation portion.

## Description

### TECHNICAL FIELD

The present invention relates to a power feed system for a vehicle which supplies power such as a power supply to a control system such as a distributed control system for controlling a load of various electric devices mounted on a vehicle.

### BACKGROUND ART

A load of the electric devices of a vehicle has been increased and a power supply system and a signal system for electronic control of a main machine and an auxiliary machine have been increased and a large quantity of electric equipment are mounted exemplified in a change of instruments of a front panel to electronic display method. With that trend, increase of the power supply system and the signal system has become a big problem, and standardization and rationalization of the power supply system and the signal system have been promoted in order to ensure their reliability. As an example, a CAN (controller area network) system is applied to a backbone system to a signal system, while an in-vehicle LAN to which a LIN (local interconnect network) system is applied is employed for terminal communication. As the CAN system targeted for the backbone system, a CSMA/CD (Carrier Sense Multiple Access with Collision Detection) is employed as a communication method, and standardization such as autonomous distributed control by each controller has progressed.

As nonconformity found in the load of the electric devices, not only such a case that an abnormal current is generated during operation of a normal load but also many nonconformities are seen that even during non-operation, operation can not be activated upon operation request due to the reason as insufficient contact between the load of the electric devices and a power line. In order to check if each load is in the operable state or not, check is made on normal operation by actually making an operation request. If a load which causes normal operation impossible is detected by this checking means, the electric equipment, parts or the like of the load concerned is usually replaced. However, a true cause is often a defective contact between the equipment and the power line rather than nonconformity of the equipment.

Japanese Patent Laid-Open No. 57-80239 (Patent Document 1) discloses a technology that a power line is made in the loop state, a current sensor is disposed at least at one location of a power line, and when the current sensor detects an abnormal state, the detected state is notified to a central control portion, and the central control portion evaluates (specifies) a position where abnormality occurred by sequentially activating/deactivating a plurality of power control portions and when the abnormality occurring position is specified, the portion is separated from a power loop.

In Japanese Patent Laid-Open No. 5-64361 (Patent Document 2), by wiring two independent systems of power line for a plurality of load controllers controlling an auxiliary machine for a vehicle, respectively, even if either one of the power lines is short-circuited due to a collision or the like, power feed is to be continued to all the auxiliary machines. Here, when wiring a plurality of load controllers to the two independent power lines, respectively, a diode for preventing reverse current is interposed for all the load controllers.

In Japanese Patent Laid-Open No. 10-262330 (Patent Document 3), information is exchanged through a multiplex signal transmission unit to an adjacent power distributing device so that a failure point is specified and eliminated based on the information.

On the other hand, a large number of actuators by a motor, a relay and the like are attached as electric devices in an automobile door, and a control system for independent distributed control of those electric devices by data communication is in development. In this control system, an in-vehicle LAN utilizing the above CAN system, the LIN system is used.

In this control system, as shown in Japanese Patent Laid-Open No. 2003-134720 (Patent Document 4), for example, a communication circuit is incorporated in a connector to be connected to an individual actuator so that the communication data can be sent/received between a control device on the car body side and a driving circuit. Here, a wire harness used as a communication bus (hereinafter noted as "communication bus harness") is comprised by a power line, an earth line and a control signal line, and a usual insulating-coated electric wire is used.

Such a distributed control system of an actuator is not used for control of all the onboard electric devices yet, but a wire harness bundling usual electric wires is used for wiring particularly to a plurality of electric devices of a rear door (also called as a back door) requiring opening/closing and it is wired individually to each electric device at present.

Also, in supply of driving power and transmission of a control signal to electric devices including a wiper motor, door-lock actuator, E latch and so on attached on the rear door, a method of branching or extending the usual wire harness and connecting it to the individual electric devices is employed. Specifically, as shown in Fig. 20, for example, a wire harness 350 is wired to a door inner panel 32 by inserting it through a wiring hole 32c of the door inner panel 32 of a rear door 31, and male connectors 371 to 374 on the actuator 381 to 384 side are fitted/connected to female connectors 361 to 364 connected to a plurality of branch lines 351 to 354 branched from the wire harness 350 so that the actuators 381 to 384 are drive-controlled individually.

Moreover, as a wiring structure of these harnesses to the rear door, such a structure as shown in Japanese Utility Model Laid-Open No. 61-090616 (Patent Document 5), for example, that a recess portion with an open section is formed on a door inner panel of a rear door panel formed by a door outer panel and the door inner panel and forming a closed section and the wire harness is wired in this recess portion or a structure as shown in Japanese Patent Laid-Open No. 2002-096697 (Patent Document 6), for example, that a wire harness is wired in an internal space of the rear door are proposed.
[Patent Document 1] Japanese Patent Laid-Open No. 57-80239
[Patent Document 2] Japanese Patent Laid-Open No. 5-64361
[Patent Document 3] Japanese Patent Laid-Open No. 10-262330
[Patent Document 4] Japanese Patent Laid-Open No. 2003-134720
[Patent Document 5] Japanese Utility Model Laid-Open No. 61-090616
[Patent Document 6] Japanese Patent Laid-Open No. 2002-096697

### DISCLOSURE OF INVENTION

### PROBLEM TO BE SOLVED BY THE INVENTION

However, in a periphery portion of a vehicle such as a roof, a side door, a rear door, etc., standardization and rationalization of the power system and the signal system have not been promoted as the backbone portion.

In the power system, a line for individually feeding to each load is provided, and a fuse is provided as protection means at each line, which shows that rationalization has not been realized. Also, for the signal system, if multiplexing is to be promoted by applying a LIN system, a node portion where signals are integrated becomes larger, and under the circumstances that an area where wiring of the power system and the signal system can be laid is extremely limited as in the side door and the rear door, ensuring of the installation area for wiring becomes difficult.

Once the fuse used as the protection means is fused by over current, the fuse should be replaced to start power feed again. This has a defect that not only costs for parts are needed but also labor is required. IPS does not require part replacement, but since a current sensor, a control portion, a driver and the like are constructed by semiconductors, there is a problem that costs would become high. If a circuit is disconnected and a current stops flowing in a PTC device, the temperature drops and with the temperature drop, a resistance value is lowered even if the failure is not recovered, and an abnormal current would flow again, which is a problem.

The method disclosed in Japanese Patent Laid-Open No. 57-80239 avoids complexity in the construction of the power line, but there is a problem that failure detection takes time and separation of a failure occurring portion also takes time.

With the method disclosed in Japanese Patent Laid-Open No. 5-64361, in wiring the plurality of load controllers to the two independent systems of power lines, respectively, it is necessary to interpose a diode for preventing reverse current for all the load controllers irrespective of the importance and the like of the load. Therefore, a diode for preventing reverse current becomes necessary for power supply also for the load with low importance, but this increases costs and moreover causes ensuring of an installation space more difficult. Also, if both the two systems of the power lines have earth fault due to an accident or the like, there is a problem that power feed to all the connected loads is stopped.

In the method disclosed in Japanese Patent Laid-Open No. 10-262330, a complicated logic is used to specify a failure spot, and there is a problem that the same function is required for all the loads connected to a power feed line even if it is a load with a low importance.

As can be seen in the above publicly known examples, a connection state of a load node and detection of abnormality is determined based on information of each node obtained through a communication system. Since information is managed through the communication system in this way, the communication process is made complicated. Also, if abnormality occurs in the communication system, there is a fear that the state of the control system can not be grasped. This means that the reliability of the control system depends not only on the reliability of itself but also on the reliability of the communication system.

The number of electric devices attached on the rear door has been further increased in recent years, and the usual wire harness wiring as in conventional example is getting difficult to be inserted into a wiring hole of a door inner panel since the outer diameter or sectional area of the wire harness itself is increased. Also, since a groove or a path gap for wire harness wiring can not be provided in advance on the door inner panel side due to costs, it is difficult to wire a wire harness in a limited gap between the door inner panel and a trim.

Also, since conventional connection to individual electric devices fits connectors not fixedly supported to each other in a narrow space, there is a defect that the connection is extremely hard to be performed and takes time.

Moreover, if a multiplex transmission system is to be employed to promote size reduction of the wire harness, the harness itself for a communication bus does not have sufficient strength in the conventional electric wire to withstand tension at wiring or an external force after wiring and in addition, since there is a fear that the wire harness is damaged by burs or sharp edges generated in the inner panel, some protective measures needs to be taken, which requires cost and labor.

The present invention was made in view of the above circumstances and has an object to provide a power feed system for a vehicle which can check the connection state between the power line and the node and the operation situation of the load not through the communication system and can easily carry out detection of occurrence of abnormality and specification of an abnormal node at a normal time.
Moreover, the present invention has an object to provide protective means which can hold the abnormality detection state till the cause of the abnormality is removed from the abnormal node and to provide a power feed system for a vehicle which can continue normal power feed by a part of the nodes even if a plurality of power lines are brought into a failure state such as ground fault due to an accident or the like.

### MEANS FOR SOLVING PROBLEM

A first mode of a power feed system for a vehicle of the present invention is a power feed system for a vehicle provided with a plurality of nodes provided with a load control portion for controlling an electric load disposed at each portion of a vehicle, respectively, a power line for supplying power to each node, and a multiplex transmission line connecting each node to each other, comprising an abnormal current detection portion disposed in a line for receiving power feed from the power line at each node for detecting abnormality of a load current, a detection signal generation portion which starts to receive power when abnormality is detected at the abnormal current detection portion and sends a weak current as an output signal, a diagnostic signal line in common to each node, connected to the detection signal generation portion for transmitting the signal from the detection signal generation portion, and a switching portion for switching the power feed from the power line to the load control portion or the detection signal generation portion.

A second mode of the power feed system for a vehicle of the present invention is characterized in that the switching portion provided at each node is connected to the detection signal generation portion side when the load of the node is not operated.

A third mode of the power feed system for a vehicle of the present invention is characterized in that the detection signal generation portion provided at each node is comprised by resistors with the size different for each node and a value of an output signal sent from the detection signal generation portion is in the size different for each node.

A fourth mode of the power feed system for a vehicle of the present invention is characterized in that the detection signal generation portion provided at each node sets the size of a resistor of the detection signal generation portion so that a value of an output signal sent from the detection signal generation portion becomes a predetermined size determined in advance for each node.

A fifth mode of the power feed system for a vehicle of the present invention is characterized in that the detection signal generation portion provided at each node is connected to an existing multiplex transmission line so as to make a common diagnostic signal line unnecessary.

A sixth mode of the power feed system for a vehicle of the present invention is characterized in that a display portion connected to the diagnostic signal line for displaying a signal transmitted from the detection signal generation portion of each node is further provided.

A seventh mode of the power feed system for a vehicle of the present invention is characterized in that an abnormal node determination portion connected to the diagnostic signal line for determining an abnormal node based on a signal transmitted from the detection signal generation portion of each node is further provided.

An eighth mode of the power feed system for a vehicle of the present invention is characterized in that a node connection diagnosis portion connected to the diagnostic signal line for diagnosing connection state between each node and the power line at battery connection or engine start based on a signal transmitted from the detection signal generation portion is further provided.

A ninth mode of the power feed system for a vehicle of the present invention is characterized in that a load monitor portion connected to the diagnostic signal line for monitoring whether a load of each node is operating or not at a normal time based on a signal transmitted from the detection signal generation portion each node is further provided.

A tenth mode of the power feed system for a vehicle of the present invention is a power mode system comprising a plurality of power supply systems, a plurality of nodes provided with a load controller for controlling an electric load disposed at each location of a vehicle, respectively, and a loop-state power line connected to each of the plurality of power supply systems, in which each node is connected to the loop-state power line, characterized in that each of the plurality of power supply systems and the loop-state power line are connected at a power line connection portion and the loop-state power line has a circuit protection portion between the power line connection portion and the node.

An eleventh mode of the power feed system for a vehicle of the present invention is characterized in that the circuit protection portion has circuit shut-off means provided with a self-recovery function, a contact connected in series with the circuit shut-off means, and contact holding means connected in parallel with the circuit shut-off means and the contact for open-holding the contact.

A twelfth mode of the power feed system for a vehicle of the present invention is characterized in that the circuit protection portion has circuit shut-off means provided with a self-recovery function, a first contact connected in series with the circuit shut-off means, a backup power line branched on the downstream side of the circuit shut-off means for supplying power to the load side, a second contact provided on the backup power line, and contact holding means connected in parallel with the circuit shut-off means and the contact for open-holding the first contact and closed-holding the second contact.

A thirteenth mode of the power feed system for a vehicle of the present invention is characterized in that the circuit protection portion further has abnormality warning means for notifying that an abnormal current is generated in the circuit shut-off means.

A fourteenth mode of the power feed system for a vehicle of the present invention is characterized in that the circuit protection portion further has recovery means for recovering operation of the circuit protection portion to a state before occurrence of the abnormal current after the cause of occurrence of the abnormal current is removed.

A fifteenth mode of the power feed system for a vehicle of the present invention is characterized in that at the loop-state power line, open portions are formed at both sides with one or more adjoining nodes connected to the power line between them for each line.

A sixteenth mode of the power feed system for a vehicle of the present invention is characterized in that the power line in a section held by the open portions provided at each power line, a protective structure for protecting the power line from a failure such as earth fault is provided.

A seventeenth mode of the power feed system for a vehicle of the present invention is characterized in that for each node connected to the power line between the open portion provided at one of the power lines and the open portion provided at another line, connection between the power line and each node is made through reverse-current prevention means, while for each node connected to the power line between the power line connection portion to the open portion, connection between the line having the open portion and each node is made through the reverse-current prevention means and the connection between the other line not having the open portion and each node is made not through the reverse-current prevention means.

An eighteenth mode of the power feed system for a vehicle of the present invention is characterized in that it is applied to a communication system circuit by having an upper level controller in place of the plurality of power supplies and to have a loop-state signal line connected to the load controller of each node in place of the loop-state power line.

A nineteenth mode of the power feed system for a vehicle of the present invention is characterized in that the node comprises an electronic-part incorporated connector in which an electronic part for drive-controlling a plurality of electric devices attached to a car body or a door is incorporated, and the power line and the multiplex transmission line comprise a communication bus harness having a plurality of conductors, and the electronic-part incorporated connector is provided on the communication bus harness.

A twentieth mode of the power feed system for a vehicle of the present invention is characterized in that the communication bus harness is formed in the flat state.

A twenty first mode of the power feed system for a vehicle of the present invention is characterized in that the communication bus harness comprises a flexible flat cable.

A first mode of a wiring body with connector of the present invention is characterized in that an electronic-part incorporated connector in which an electronic part for drive-controlling a plurality of electric devices attached to a car body or a door is incorporated is connected to a communication bus harness having a plurality of conductors and the communication bus harness includes a power line and formed in the flat state.

A second mode of a wiring body with connector of the present invention is characterized in that the electronic-part incorporated connector is connected to the communication bus harness so that it can be fixed to a car body in the vicinity of the vehicle door electric device.

A third mode of a wiring body with connector of the present invention is characterized in that the communication bus harness comprises a flexible flat cable.

A first mode of a wiring structure of a wiring body with connector of the present invention is characterized in that the above-mentioned wiring body with connector is wired to the car body or the door.

A second mode of a wiring structure of a wiring body with connector of the present invention is characterized in that the wiring body with connector is wired in a clearance formed by a door inner panel and a trim of an electric device attachment portion provided at a door of the vehicle.

A third mode of a wiring structure of a wiring body with connector of the present invention is characterized in that the wiring body with connector is wired along a one-side edge portion of an opening for mounting an electric device provided at the door inner panel.

### EFFECT OF THE INVENTION

According to this invention, when an abnormal current is detected by an abnormal current detection portion of any node at a normal time, a switching portion of the node is switched to power feed to a detection signal generation portion of the node from the power feed to a load. As a result, since a predetermined output signal is provided to a driver via a diagnostic signal line from the detection signal generation portion, it has an excellent effect that the driver can know occurrence of the abnormality and the location of abnormality occurrence at once. Also, by using a common diagnostic signal line, it can be realized without increasing a load of a multiplex transmission line and a multiplex transmitting device, and moreover, it has an excellent effect that even if an abnormality occurs at the multiplex transmission line, the power feed state to each node can be checked.

Moreover, according to the power feed system for a vehicle of this invention, since the switching portion of the node is connected to the detection signal generation portion side in case of non-operation of the load, it has an excellent effect that normal power feed to the node can be checked even if the load is not operating.

Moreover, according to the power feed system for a vehicle of this invention, by setting the size of a resistor of the detection signal generation portion of each node to a different value specific to each node, it has an excellent effect that a node where an abnormality occurs can be determined based on a signal transmitted from the detection signal generation portion via the diagnostic signal line at abnormality.

Moreover, according to the power feed system for a vehicle of this invention, by setting the size of a resistor of the detection signal generation portion of each node so that a signal transmitted from the detection signal generation portion of each node via the diagnostic signal line becomes a predetermined value, it has an excellent effect that an abnormal node can be easily identified at occurrence of an abnormality.

Moreover, according to this invention, by connecting the detection signal generation portion of each node to the multiplex transmission line so that an output signal from the detection signal generation portion is transmitted via the multiplex transmission line, it has an excellent effect that a common diagnostic signal line is not needed any more and not only costs are reduced but a wiring volume is also reduced.

Moreover, according to this invention, by adding a display portion for displaying an output signal from the detection signal generation portion of each node, it has an excellent effect that a display method by which the operation/non-operation state of a load of each node and connection state of the power line and each node can be easily recognized can be provided to a driver.

Moreover, according to this invention, by adding an abnormal node determination portion for determining an abnormal node based on an output signal from the detection signal generation portion of each node, it has an excellent effect that a driver can immediately and surely recognize an abnormal node.

Moreover, according to this invention, by adding a node connection diagnosis portion, it has an excellent effect that a driver can check the connection state between each node and the power line before driving and can easily check particularly if an electric load required for safety driving is normally fed before driving.

Moreover, according to this invention, by adding a load monitor portion, it has an excellent effect that a driver can check if a load of each node is operating or not and easily check particularly if an electric load required for safety driving is normally operating.

According to the present invention, by providing a circuit protection portion on the loop-state power line side of the power line connection portion, which is a connection portion between each of a plurality of power supply systems and the loop-state power line, specifically between the power line connection portion and the node, it has an excellent effect that power feed is continued at disconnection of a power line due to an accident or the like for the power line without earth fault in a section from the disconnection portion to the circuit protection portion.

Moreover, according to this invention, even if the circuit protection portion is operated by using the circuit shut-off means provided with a self-recovery function at the circuit protection portion, there is no need for part replacement and moreover, the state at abnormality detection can be maintained by providing contact holding means, which leads to an excellent effect that unnecessary discharge of a battery and the like can be prevented. Also, since inexpensive parts such as a relay, PTC device and the like can be used and logic of the protection function is simple, implementation with low costs can be realized.

Moreover, according to this invention, there is an excellent effect that even if the circuit protection portion is operated due to ground fault or the like of the power line, power feed to a load from the backup power line is continued by addition of the backup power line.

Moreover, according to this invention, there is an excellent effect that by installing the abnormality warning means and recovery means, the driver can rapidly grasp abnormality and return to the normal state immediately after the cause of the abnormality is removed.

Moreover, according to this invention, by providing the open portion at the power line, even if the plurality of lines are earth-faulted, there is an excellent effect that power feed to a part of the loads can be continued. Particularly, since power feed is possible all the time for the node connected to the power line held between the open portions at plural locations irrespective of the ground fault position of the power line, stability of the system can be further improved by allocating the load having an important function to the node.

Moreover, according to this invention, by adding the protective structure to the power line in the section held between the open portions, power feed to the node connected to that section is more stabilized. Thus, by connecting the load with an important function to that section, stability of the system can be significantly improved.

Moreover, according to this invention, for the node connected to the power line other than the section held between the open portions, not only that costs can be reduced by omitting installation of the reverse-current prevention means but an installation space may be small, which is an excellent effect.

Moreover, according to this invention, application not only to the power system but also to the communication system is easy, and reliable communication system can be realized.

According to the wiring body with connector of the present invention, there is no need to remodel the car body side even for a door to which a large number of electric devices such as a rear door are attached, and since wiring is easy, no special protective measures are needed for an external force or hooking during wiring work or connecting fitting work and a distributed control harness and its wiring structure can be provided for which connecting fitting work is easy.

Also, according to the wiring body with connector of the present invention, since the electronic-part incorporated connector is connected in the fixed manner to the car body in the vicinity of the electric device, the connector fitting work is improved than before, and a connector on the actuator side can be easily fitted in the electronic-part incorporated connector even with one hand.

Also, according to the wiring body with connector of the present invention, since the communication bus harness is a flexible flat cable, the communication bus harness can be easily wired along the shape of the door inner panel and moreover, since the flexible flat cable which is extremely resistant against the external force and tension is used, there is no need to take a special protective measure for the communication bus harness any more, by which the workability is improved and costs are reduced.

Also, according to the wiring structure of the wiring body with connector of the present invention, since the wiring body with connector can be wired in a clearance formed by the door inner panel of the electric device attachment portion and the trim, there is no need to provide a groove or a path clearance for harness wiring on the door inner panel side in advance. That is, even if the number of electric devices to be attached to the door is increased, an existing door inner panel structure can be used, which is advantageous in costs.

Also, according to the wiring structure of the wiring body with connector of the present invention, the wiring body with connector can be wired in a clearance between the door inner panel and the trim, and the electronic-part incorporated connector on the communication bus harness side can be arranged at a location where the connector on the electric device side can be easily fitted.

### BRIEF DESCRIPTION OF DRAWINGS

Fig. 1 is a diagram for explaining an entire construction of a power feed system for a vehicle of the present invention;
Fig 2 is a diagram showing an operation of a switching portion when a part of a load is not operating in the entire construction diagram shown in Fig. 1 ;
Fig. 3 is a diagram showing a calculation equation of an equivalent circuit and a potential difference of the entire construction shown in Fig. 1;
Fig. 4 is a diagram showing an example of detected potential difference, different according to a combination of nodes where an abnormal current is detected;
Fig. 5 is a diagram showing an entire construction of a power feed system for a vehicle of the present invention when a multiplex transmission line is used instead of a diagnostic signal line;
Fig. 6 is a diagram for explaining an entire construction of a power feed system for a vehicle of the present invention;
Fig. 7 is a diagram for explaining the construction of a circuit protection portion of the present invention;
Fig. 8 is a diagram showing a temperature characteristic of a PTC device;
Fig. 9 is a diagram showing a construction of the circuit protection portion of the present invention to which a backup power line is added;
Fig. 10 is a diagram showing a construction of the circuit protection portion of the present invention to which an abnormality warning light is added;
Fig. 11 is a diagram showing a construction of the circuit protection portion of the present invention to which a recovery switch to return to the state before occurrence of the abnormal current is added;
Fig. 12 is a diagram for explaining action of the power feed system for a vehicle of the present invention provided with an open portion;
Fig. 13 is a diagram showing an example of a method for making the open portion in the power line;
Fig. 14 is a diagram showing an example of the power feed system for a vehicle provided with the open portion of the present invention to which a protective structure is added;
Fig. 15 is a diagram for explaining action when the number of diodes is reduced in connection between the power line and the node in the power feed system for a vehicle provided with the open portion of the present invention;
Fig. 16 is a diagram showing an example of a node when the power feed system for a vehicle of the present invention is applied to the communication circuit;
Fig. 17 is a partial top view showing an example of a state where the wiring body with connector according to the present invention is wired in the inner panel of the rear door;
Fig. 18 is a sectional view in II-II arrow direction in Fig. 17;
Fig. 19 is an exploded perspective view showing an example of an electronic-part incorporated connector shown in Fig. 17; and
Fig. 20 is a wiring connection simulation diagram of a conventional rear-door harness.

### EXPLANATIONS OF LETTERS OR NUMERALS

- 1:: Power line
- 2:: Multiplex transmission line
- 3:: Diagnostic signal line
- 4a, 4b, 4c:: Node
- 5:: Abnormal current detection portion
- 6:: Switching portion
- 7, 8:: Contact
- 9:: Load control portion
- 10:: Detection signal generation portion
- 11:: Bias resistor
- 201, 221:: Power supply device
- 202, 203:: Power supply
- 204, 205, 224:: Power line
- 206, 207:: Power line connection portion
- 208A, 208B, 209A, 209B:: Circuit protection portion
- 210:: Load controller
- 211a, 211b, 211c, 211d:: Node
- 212:: Diode
- 213:: Ground fault point
- 214:: Open point
- 215:: Ground fault point
- 216:: Protective structure
- 217, 218:: Open portion
- 219:: Communication portion
- 222:: PTC device
- 223, 228, 229, 231:: Contact
- 225:: Contact holding means
- 226, 227:: Relay excitation portion
- 230:: Load
- 232:: Backup power line
- 233:: Warning lamp
- 234:: Recovery switch
- 241:: Flexible flat cable
- 242, 243:: Pierce terminal
- 244, 245:: Open portion
- 301:: Rear door
- 301c, 301d:: Door pillar
- 302:: Door inner panel
- 302a:: Upper face
- 302b:: Edge portion
- 302c, 302d:: Wiring hole
- 302e:: Edge portion
- 303 to 306:: Open portion
- 307:: Wiper motor (actuator)
- 308:: Door lock actuator
- 309:: E latch (actuator)
- 310:: Closer motor (actuator)
- 311 to 314:: Connector
- 315, 316:: Weather strip
- 317:: Trim
- 321:: Communication bus harness
- 322:: Power line
- 323:: Earth line
- 324:: Control signal line
- 325 to 328:: Electronic-circuit incorporated connector (connector)
- 330:: Case
- 331:: Lower case
- 331a:: Projecting edge portion
- 331b:: Protective flange
- 331c:: Opening
- 332:: Upper case
- 332a:: Projecting edge portion
- 333:: Hinge portion (thin portion)
- 335:: Flexible printed wiring board (Printed wiring board)
- 335a:: Lower face
- 335b:: Upper face
- 335c:: Side portion
- 335d:: Wire connection portion
- 335e:: Terminal connection portion
- 336:: Heat sink
- 337:: Female terminal
- 341:: Power IC
- 342:: Control IC
- 343:: Electronic part
- 345, 346:: Piercing connection portion
- 350:: Wire harness
- 351 to 354:: Branch line
- 361 to 364:: Female connector
- 371 to 374:: Male connector
- 381 to 384:: Actuator

### BEST MODES FOR CARRYING OUT THE INVENTION

Embodiments of a power feed system for a vehicle according to the present invention will be described referring to the accompanying drawings.
A first mode of a power feed system for a vehicle of the present invention is a power feed system for a vehicle provided with a plurality of nodes provided with a load control portion for controlling an electric load disposed at each portion of a vehicle, respectively, a power line for supplying power to each node, and a multiplex transmission line connecting each node to each other, comprising an abnormal current detection portion disposed in a line for receiving power feed from the power line at each node for detecting abnormality of a load current, a detection signal generation portion which starts to receive power when abnormality is detected at the abnormal current detection portion and sends a weak current as an output signal, a diagnostic signal line in common to each node, connected to the detection signal generation portion for transmitting the signal from the detection signal generation portion, and a switching portion for switching the power feed from the power line to the load control portion or the detection signal generation portion.

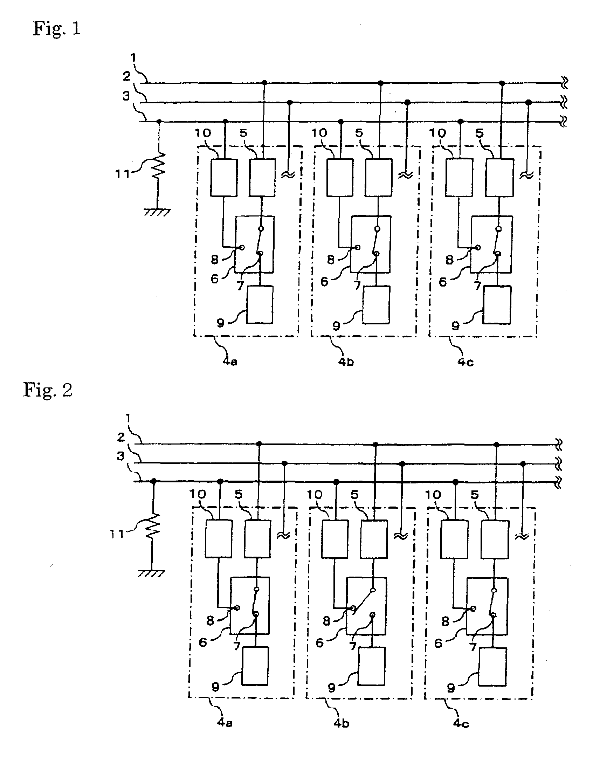

Fig. 1 is a diagram for explaining the entire construction of the first mode of the power feed system for a vehicle of the present invention. The plurality of nodes 4a, 4b, 4c are provided with a load control portion 9 for controlling an electric load disposed at each portion in a vehicle, respectively, and connected to a power line 1 for supplying power to the load of each node and a multiplex transmission line 2 for transmitting information such as a control signal, respectively. Each node is provided with, in addition to the load control portion 9, an abnormal current detection portion 5, a detection signal generation portion 10 and a switching portion 6, respectively.

The abnormal current detection portion 5 is disposed to a line receiving power feed from the power line 1 and monitors generation of abnormal overcurrent. This abnormal current detection portion 5 is formed by a resistor in the mΩ order, for example. The switching portion 6 is connected to a contact 8 side when the node is not operated and to a contact 7 side at normal operation and switches a power feed path to the contact 8 side when abnormality of the load current is detected by the abnormal current detection portion 5. The detection signal generation portion 10 is comprised by a resistor with a resistance value sufficiently larger than the resistance component of the abnormal current detection portion 5 (in the kΩ order, for example), and its input side is connected to the contact 8 of the switch 6 and the output side to a diagnostic signal line 3. In the power feed system for a vehicle of the present invention, other than the power line 1, the multiplex signal line 2 and the diagnostic signal line 3, grounding lines, not shown, exist. Also, at least one end side of these wirings (left side in Fig. 1, for example) is connected to a multiplex transmitting device, not shown.

Since the power feed path is connected to the contact 8 side at the switch 6 in the initial state, and since the power feed path is switched from the contact 7 to the contact 8 side when the abnormal current is detected at the abnormal current detection portion 5, the detection signal generation portion 10 starts power receiving. When power receiving is started at the detection signal generation portion 10, a weak current is sent out as an output signal to the diagnostic signal line 3 via a resistor placed at the detection signal generation portion 10. The common diagnostic signal line 3 is connected to the output side of the detection signal generation portion 10 at each node, and when an abnormal current is detected at the abnormal current detection portion 5 of any node, a signal is sent out to the common diagnostic signal line 3. The common diagnostic signal line 3 is grounded via a predetermined bias resistor 11.

Operation of the power feed system for a vehicle constructed as above will be described below. When the load powered from the node 4a is operating, the contact 7 side connected to the load control portion 9 is in the closed state at the switching portion 6 of the node, and power is fed to the load control portion 9. Here, if abnormality occurs at the load powered from the node 4a and an abnormal current flows, the abnormal current detection portion 5 of the node 4a detects this and instructs switching to the switching portion 6 of the node. The switching portion 6 switches the power feed path from the contact 7 to the contact 8 by the instruction from the abnormal current detection portion 5 and starts power feed to the detection signal generating portion 10. When power is fed to the detection signal generating portion 10, the current flowing via the resistor of the detection signal generating portion 10 is sent out to the diagnostic signal line 3. Since the diagnostic signal line 3 is biased by the predetermined resistor 11, detection of occurrence of the abnormal current is made possible by measuring a potential of the diagnostic signal line 3.

A second mode of the power feed system for a vehicle of the present invention is characterized in that the switching portion provided at each node is connected to the detection signal generation portion side when the load of the node is not operated.

Fig. 2 is a diagram for explaining the second mode of the power feed system for a vehicle of the present invention. In this figure, when the load controlled by the node 4b is not operating, the power feed path is connected to the contact 8 side at the switching portion 6 of the node 4b. By this, when the load is not operating, a signal is sent out to the diagnostic signal line 3 from the detection signal generating portion 10 of the node 4b, and it can be determined that the load is not operating by measuring the potential of the diagnostic signal line 3. Also, if a signal is not sent out from the detection signal generating portion 10 of the node 4b even though the load connected to the node 4b is not operating, it can be determined that connection between the node 4b and the power line is defective. By connecting each node 4a, 4b, 4c and the power line 1 as well as the diagnostic signal line 3 with an integral connector, a state where only the connection between each node 4a, 4b, 4c and the diagnostic signal line 3 becomes defective can be avoided.

A third mode of the power feed system for a vehicle of the present invention is characterized in that the detection signal generation portion provided at each node is comprised by resistors with the size different for each node and a value of an output signal sent from the detection signal generation portion is in the size different for each node.

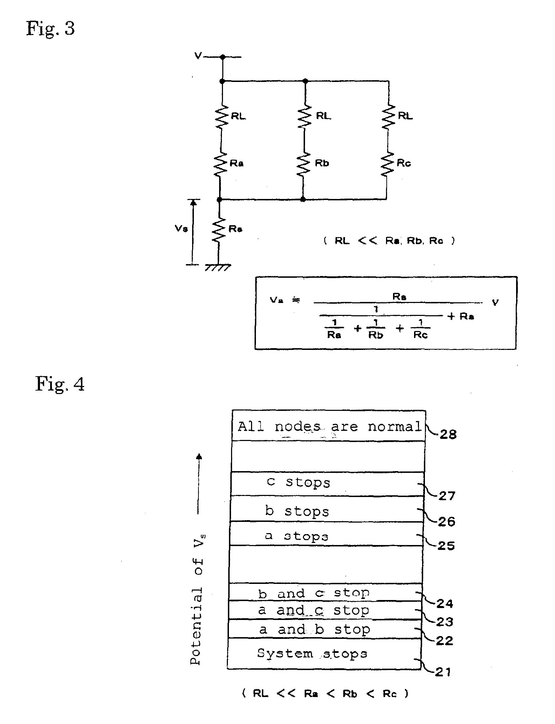

The third mode according to the present invention will be described using Figs. 1 and 3. In the present invention, the resistor placed at the detection signal generation portion 10 has a specific size different according to each node. Moreover, the size of the resistor of the detection signal generation portion 10 of each node is set so that the node outputting the signal can be individually identified even if a signal is outputted from the detection signal generation portion 10 of a plurality of nodes at the same time. An upper part of Fig. 3 shows an equivalent circuit in Fig. 1, in which RL indicates a resistance value of the abnormal current detection portion 5, Ra, Rb, Rc for the resistance values of each of the detection signal generation portions 10 of the nodes 4a, 4b, 4c, respectively, and Rs for the resistance value of the bias resistor 11. Here, the resistance value of the abnormal current detection portion 5 of each node is supposed to be equal to each other.

A lower part of Fig. 3 shows an equation to calculate a potential difference Vₛ of the bias resistor 11 in the equivalent circuit of the upper part in the same figure. However, since the resistance RL of the abnormal current detection portion 5 is sufficiently smaller than the resistances Ra, Rb, Rc of the detection signal generation portion 10, RL is ignored in the above calculation equation of V_{S}. The above calculation equation of V_{S} is a calculation equation of V_{S} when a signal is outputted from all the detection signal generation portions 10 of each node 4a, 4b, 4c, and if a signal is not outputted from the detection signal generation portion 10 of the node 4a, for example, the V_{S} of the case where the signal is outputted from the detection signal generation portions 10 of the nodes 4b, 4c can be calculated by deleting the term for Ra included in the above calculation equation of V_{S}. Thus, the size of the resistance of each detection signal generation portion 10 of each node can be determined so that each V_{S} calculated for every combination of the nodes to which the signal is outputted from the detection signal generation portion 10 has a different value, respectively. For example, suppose that the sizes of the resistances Ra, Rb, Rc are 1:2:4, all the V_{S} calculated for every combination of the nodes to which the signal is outputted from the detection signal generation portion 10 have different values. By this, it is made possible to determine from which node the signal is outputted by monitoring V_{S}.

A fourth mode of the power feed system for a vehicle of the present invention is characterized in that the detection signal generation portion provided at each node sets the size of a resistor of the detection signal generation portion so that a value of an output signal sent from the detection signal generation portion becomes a predetermined size determined in advance for each node.

The fourth mode according to the present invention will be described using Figs. 1, 3 and 4. As described in the third mode, by appropriately setting the size of the resistance placed at each detection signal generation portion 10 of each node, the sizes of the resistance Ra, Rb, Rc of the detection signal generation portion of each node can be determined so that the potential difference V_{S} of the bias detection signal generation portion 11 is different from each other according to the combination of the nodes at abnormality or non-operation. In the fourth mode, the sizes of the resistance Ra, Rb, Rc of the detection signal generation portion of each node are determined so that the potential difference V_{S} of the bias detection signal generation portion 11 becomes a predetermined size according to combination of the nodes which are abnormal or not operating. One example of the size of V_{S} is shown in Fig. 4. In Fig. 4, V_{S} is in a range of 28 when the loads of each node 4a, 4b, 4c are all operating normally, while V_{S} is shown in a range of 21 when the loads of each node are all abnormal or not operating. Similarly, if the load of a part of the nodes is abnormal or not operating, the sizes of Ra, Rb, Rc are set so that V_{S} comes in ranges from 22 to 27 according to the combination of abnormal nodes. By this, determination of an abnormal or non-operating node can be made easily.

A fifth mode of the power feed system for a vehicle of the present invention is characterized in that the detection signal generation portion provided at each node is connected to an existing multiplex transmission line so as to make a common diagnostic signal line unnecessary.

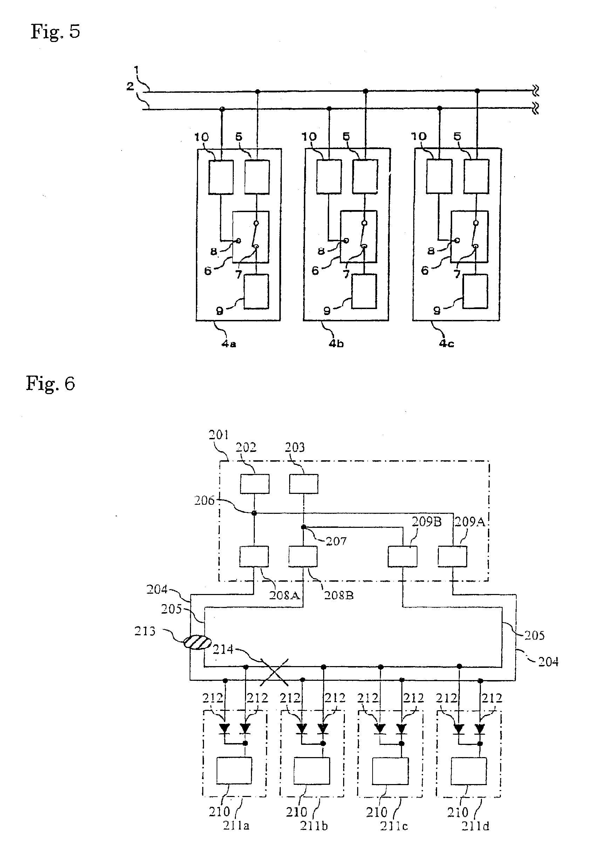

The fifth mode according to the present invention will be described referring to Fig. 5. In Fig. 5, a signal of the detection signal generation portion 10 of each node is outputted to the multiplex transmission line 2. By this, by eliminating the necessity of the common diagnostic signal line, costs and the wiring volume can be reduced. In Fig. 5, a path between each node and the multiplex transmission line 2 for transmitting information such as a control signal is not shown.

A sixth mode of the power feed system for a vehicle of the present invention is characterized in that a display portion connected to the diagnostic signal line for displaying a signal transmitted from the detection signal generation portion of each node is further provided.

The sixth mode of the power feed system for a vehicle of the present invention will be described referring to Fig. 1. In this invention, a display portion (not shown) for displaying a signal transmitted from the detection signal generation portion 10 of each node is added and the display portion is connected to the diagnostic signal line 3. By installing the display portion on a front panel or the like, recognition by the driver can be improved. Also, by displaying the potential difference by the third mode or the fourth mode of the present invention on the display portion, the recognition by the driver can be further improved.

A seventh mode of the power feed system for a vehicle of the present invention is characterized in that an abnormal node determination portion (not shown) connected to the diagnostic signal line for determining an abnormal node based on a signal transmitted from the detection signal generation portion of each node is further provided.

The seventh mode of the power feed system for a vehicle of the present invention will be described referring to Fig. 1. In this invention, the abnormal node determination portion is added. The abnormal node determination portion is connected to the diagnostic signal line 3, determines an abnormal node based on a signal transmitted from the detection signal generation portion 10 of each node and notifies it to the driver.

Means for determining the abnormal node will be described below. As described in the third mode or the fourth mode of this invention, the resistance of the detection signal generation portion 10 of each node is set so that all the potential differences at the bias detection signal generation portion 11 are different according to the combination of the nodes determined as abnormal at the abnormal current detection portion 5 and to which a signal is outputted from the detection signal generation portion 10. At the abnormal node determination portion, all the potential differences of the bias detection signal generation portion 11 different according to the combination of the nodes determined as abnormal are stored, and the abnormal node is determined by comparing the stored potential difference and the actual potential difference of the bias detection signal generation portion 11. By this, the driver can determine an abnormal node rapidly and accurately.

An eighth mode of the power feed system for a vehicle of the present invention is characterized in that a node connection diagnosis portion connected to the diagnostic signal line for diagnosing connection state between each node and the power line at battery connection or engine start based on a signal transmitted from the detection signal generation portion is further provided.

The eighth mode of the power feed system for a vehicle of the present invention will be described referring to Fig. 1. In this invention, a node connection diagnosis portion (not shown) is added. The node connection diagnosis portion is connected to the diagnostic signal line 3 and diagnoses connection state between each node and the power line 1 at battery connection or engine start based on a signal transmitted from the detection signal generation portion 10 of each node.

Diagnosis means of the node connection diagnosis portion will be described. Other than the case where the load connected to each node is operating, the power feed path at the switching portion 6 of the node is connected to the contact 8 side. At battery connection or immediately after engine start, most of the loads are not operating. Thus, based on a signal sent out via the diagnostic signal line 3 at battery connection or immediately after engine start, diagnosis is made on whether a signal is sent out or not from all the nodes of the loads, which are not operating at that time. As a result, when it is determined that a signal is not sent out from the detection signal generation portion 10 of a part of the nodes, the node not sending a signal is identified. For example, the node determined as not sending a signal has a high possibility that the connection with the power line 1 is abnormal.

A ninth mode of the power feed system for a vehicle of the present invention is characterized in that a load monitor portion connected to the diagnostic signal line for monitoring whether a load of each node is operating or not at a normal time based on a signal transmitted from the detection signal generation portion is further provided.
The ninth mode of the power feed system for a vehicle of this invention will be described referring to Fig. 1. In this invention, a load monitor portion (not shown) is added. The load monitor portion is connected to the diagnostic signal line 3 and monitors if the load of each node is operating or not at normal time based on a signal transmitted from the detection signal generation portion 10 of each node.

Load monitor means by the load monitor portion will be described below. When a load connected to each node is not operating, the power feed path is connected to the contact 8 side at the switching portion 6 of the node. By this, since a signal from the detection signal generation portion 10 is sent out to the diagnostic signal line 3 from the node whose load is not operating, the node with non-operating load can be determined based on the signal sent via the diagnostic signal line 3. By addition of the load monitor portion, when the load supposed to be operating is not operated, it can be recognized rapidly.

A tenth mode of the power feed system for a vehicle of the present invention is characterized in that a plurality of power supply systems, a plurality of nodes provided with a load controller for controlling an electric load disposed at each location of a vehicle, respectively, and a loop-state power line connected to each system of the plurality of power supply systems are provided, in which each of the plurality of power supply systems and the loop-state power lines are connected at a power line connection portion and the loop-state power line has a circuit protection portion between the power line connection portion and the node.

Fig. 6 is a diagram for explaining an example of the entire construction of the tenth mode of the power feed system for a vehicle of the present invention. A power supply device 201 is comprised by two systems of power supplies 202, 203. Also, two power lines 204, 205 are power lines formed in the loop state, which are connected to the power supplies 202, 203, respectively. Moreover, circuit protection portions 208A, 209A, 208B, 209B are disposed before and after power line connection portions 206, 207 between the power supplies 202, 203 and the power lines 204, 205, respectively. A plurality of nodes 211a, 211b, 211c, 211d provided with a load controller 210, respectively for controlling an electric load disposed at each portion of a vehicle are connected to the power lines 204, 205, respectively, via a diode 212 as reverse current preventing means.

Operation of the power feed system for a vehicle constructed as above will be described below. If any power line is grounded at a point (grounding point) 213 in Fig. 6, the circuit protection portion to which the ground faulting power line is connected is operated and power feed to the power line is stopped. If the power line 204 is ground faulting, for example, the circuit protection portions 208A, 209A are operated, and power feed to the power line 204 is stopped. The above is substantially the same as the publicly known power feed system for a vehicle.

Here, suppose a case where two of the power lines are disconnected and opened at a point (open point) 214 due to an accident or the like. In this case, the node 211a is powered via the circuit protection portions 208A, 208B, while the nodes 211b, 211c, 211d are powered via the circuit protection portions 209A, 209B. In this state, if the power lines 204, 205 are both ground faulting at the ground fault point 213 in Fig. 6, for example, the circuit protection portions 208A, 208B are both operated, power feed to the node 211a is stopped and the load controlled at the node 211a can not be operated any more, but power feed to the nodes 211b, 211c, 211d is continued, and the load controlled at the nodes 211b, 211c, 211d can be operated normally.

As described in the tenth mode of the power feed system for a vehicle of this invention, by providing a circuit protection portion between the power line connection portion and the node, even if a part of the power line is further ground faulting in the state where the power line is disconnected, it has an excellent effect that power feed is continued for the power line in a section without ground fault.

The tenth mode of the power feed system for a vehicle of this invention is preferably put into practice in combination with the above-mentioned first mode of the power feed system for a vehicle of this invention from the viewpoint of failsafe.

An eleventh mode of the power feed system for a vehicle of the present invention is characterized in that the circuit protection portion has circuit shut-off means provided with a self-recovery function, a contact connected in series with the circuit shut-off means, and contact holding means connected in parallel with the circuit shut-off means and the contact for open-holding the contact.

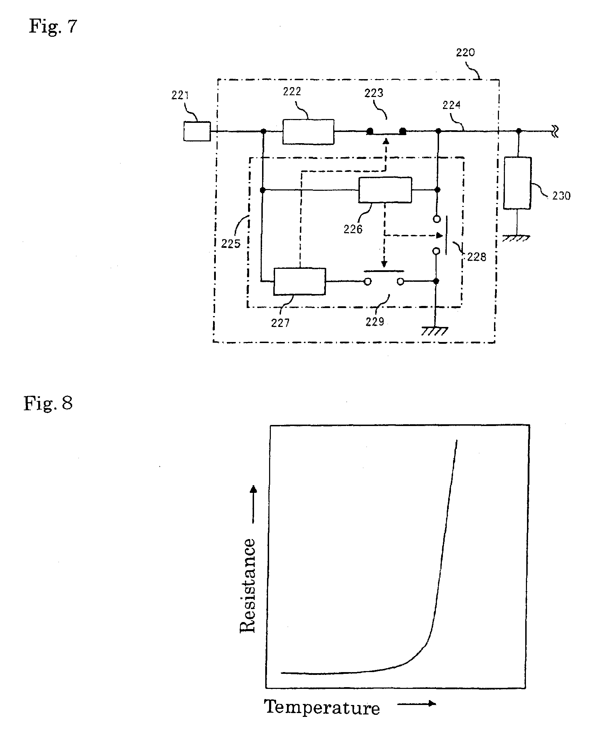

Fig. 7 is a diagram for explaining a second mode of the present invention. In Fig. 7, reference numeral 220 is a circuit protection portion and reference numeral 221 is a power supply device. The circuit protection portion 220 in Fig. 7 is a specific example of the circuit protection portions 208A, 208B, 209A, 209B. Reference numeral 222 is circuit shut-off means, and an example using a PTC device will be described below, but a circuit breaker using a bimetal or the like may be also used. The PTC device 222 has specific positive temperature characteristic, and when the temperature of the PTC device 222 is raised by overcurrent or the like, it has a characteristic that the resistance value of the PTC device 222 is rapidly increased and a current rarely flows. Also, it has reversibility that if the temperature is lowered, the resistance value returns to the original low value and the current flows again. In the present invention, the PTC device 222 having such a positive temperature characteristic is applied to the circuit protection portion 220 and further improved. An example of the positive temperature characteristic of the PTC device 222 is shown in Fig. 8. Fig. 8 shows that the resistance value is rapidly raised with increase of the temperature.

A contact 23 is connected in series with the PTC device 222 and usually held in the closed state. A power line 224 for feeding power to a load is connected to a contact 223. Contact holding means 225 is connected in parallel with the PTC device 222 and the contact 223 and comprised by two relay excitation portions 226, 227 and two contacts 228, 229. This contact holding means 225 drives the contact 223 into the open state when a ground fault accident occurs at the power line 224. The contacts 228, 229 are controlled by the relay excitation portion 226 and usually held in the open state.

Operation of the circuit protection portion 220 constructed as above will be described below. When a ground fault accident occurs at the power line 224, since an over current flows through the PTC device 222 and a voltage is applied to both ends of the relay excitation portion 226 provided in the contact holding means 225, the relay excitation portion 226 is operated and the contacts 228, 229 are driven into the closed state. At the same time, the PTC device 222 has its temperature raised by the over current. When the temperature of the PTC device 222 is raised, the resistance of the PTC device 222 is rapidly increased by its own temperature characteristic and the current flowing through the PTC device 222 is rapidly decreased. Also, when the contacts 228, 229 are brought into the closed state, the relay excitation portion 227 is excited, by which the contact 223 is brought into the open state and power feed to the power line 224 is stopped. When the contacts 228, 229 are brought into the closed state, excitation of the relay excitation portions 226, 227 is maintained.

A twelfth mode of the power feed system for a vehicle of the present invention is characterized in that the circuit protection portion has circuit shut-off means provided with a self-recovery function, a first contact connected in series with the circuit shut-off means, a backup power line branched on the downstream side of the circuit shut-off means for supplying power to the load side, a second contact provided on the backup power line, and contact holding means connected in parallel with the circuit shut-off means and the contact for open-holding the first contact and closed-holding the second contact.

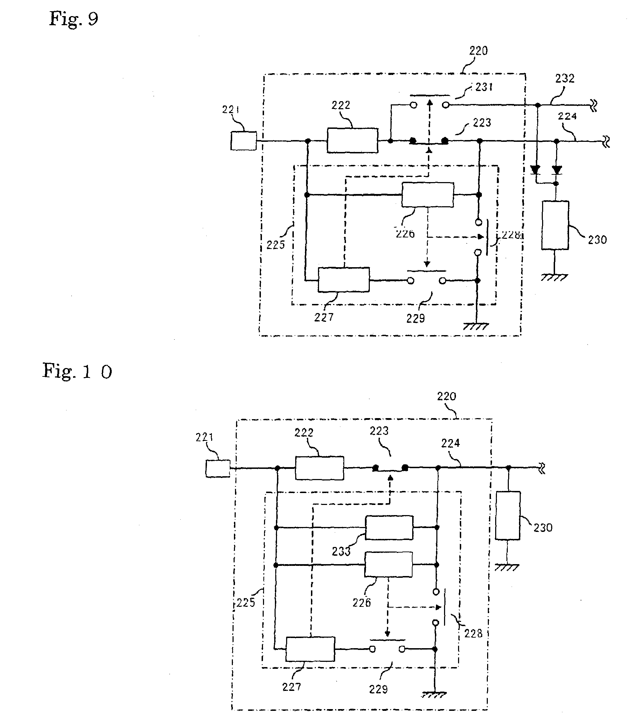

Fig. 9 is a diagram for explaining the twelfth mode of the present invention. In the twelfth mode, a backup power line is added to the circuit protection portion 220 in Fig. 7 explained in the eleventh mode. In Fig. 9, branched from between the PTC device 222 and the first contact 223, a second contact 231 and a backup power line 232 are added. The added second contact 231 is usually maintained in the open state.

Operation of the circuit protection portion 220 of the present invention shown in Fig. 9 is as follows. When a ground fault accident occurs at the power line 224, since an over current flows through the PTC device 222 and a voltage is applied to both ends of the relay excitation portion 226 provided in the contact holding means 225, the relay excitation portion 226 is operated and the contacts 228, 229 are driven into the closed state and moreover, the relay excitation portion 227 is excited as in the 2-2 mode described in Fig. 7. In the twelfth mode, when the relay excitation portion 227 is excited, the first contact 223 is driven into the open state and moreover, the second contact 231 is driven into the closed state. As a result, power feed to the power line 224 is stopped, while power feed to the backup power line 232 is started.

In the twelfth mode, by adding the backup power line 232, even if power feed to a load 230 can not be carried out any more due to a ground fault or the like of the power line 224, normal operation of the load 230 is made possible by start of power feed from the backup power line 232. Moreover, if an abnormal current also flows through the backup power line 232, the PTC device 222 does not transmit a current al all due to temperature rise by the over current, and power feed to the load is completely stopped. Therefore, such a situation that power feed is continued from the backup power line 232 in the abnormal state is avoided.

A thirteenth mode of the power feed system for a vehicle of the present invention is characterized in that in the circuit protection portion, abnormality warning means is added for notifying that an abnormal current is generated in the circuit shut-off means.

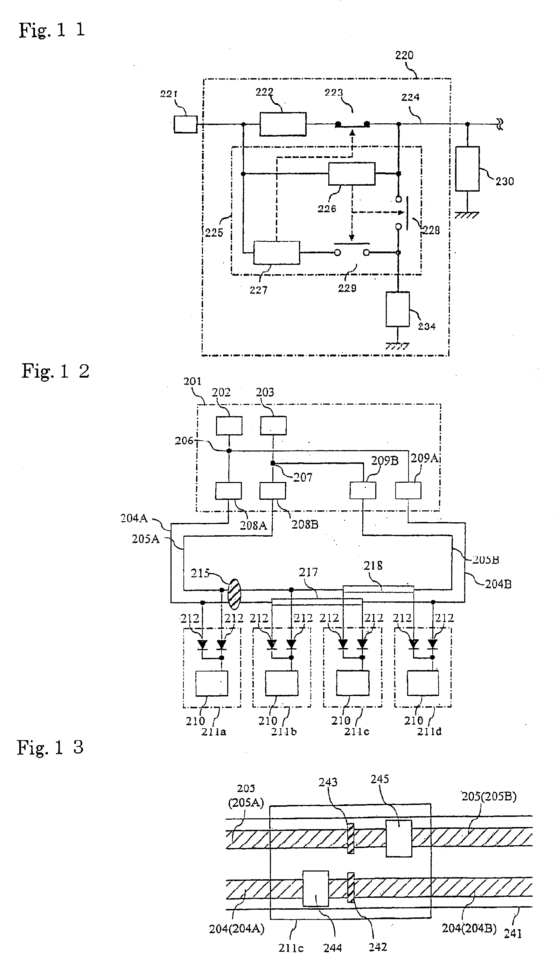

Fig. 10 is a diagram for explaining the thirteenth mode of the power feed system for a vehicle of the present invention. In the thirteenth mode, an abnormality warning lamp 233 as the abnormality warning means is added to the circuit protection portion in Fig. 7 described in the eleventh mode. The abnormality warning means 233 is not limited to the abnormality warning lamp but may be a buzzer and the like. As described in the eleventh mode, when the potential difference before and after the PTC device 222 is increased by an abnormal current due to a ground fault or the like of the power line 224, the relay excitation portion 226 is excited, and at the same time, the abnormality warning lamp 233 is lighted. By this, the driver can know abnormality of the power line 224 rapidly.

A fourteenth mode of the power feed system for a vehicle of the present invention is characterized in that the circuit protection portion further has recovery means for recovering operation of the circuit protection portion to a state before occurrence of the abnormal current after the cause of occurrence of the abnormal current is removed.

Fig. 11 is a diagram for explaining the fourteenth mode of the present invention. In the fourteenth mode, a recovery switch 234 is added as recovery means for recovering the operation of the circuit protection portion to the state before occurrence of the abnormal current at the circuit protection portion in Fig. 7 described in the eleventh mode. As means for resuming power feed to the power line 224 after the cause of the abnormality is removed, the contact 223 is returned to the closed state again, the recovery switch 234 is added to the contact holding means 225. The recovery switch 234 is provided at the grounding portion of the contacts 228, 229 in the contact holding means 225, and when it stops grounding by the recovery switch 234, excitation of the relays 226, 227 is stopped, and as a result, the contact 223 is returned to the closed state. Since the resistance value of the PCT device 222 has been recovered to the original low value due to drop of the temperature during stop of the power feed, power feed to the power line 224 is resumed at the same time when the contact 223 is returned to the closed state.

A fifteenth mode of the power feed system for a vehicle of the present invention is characterized in that at the loop state power line, open portions are formed at both sides with one or more adjoining nodes connected to the power line between them for each line.

Fig. 12 is a diagram for explaining the fifteenth mode of the present invention. The power lines 24, 25 are formed in the loop state and open portions 217, 218 are provided one each, respectively. That is in the fifteenth mode, the power line 24 is opened between the node 211b and the node 211c with the node 211c between them, and the power line 5 is opened between the node 211c and the node 211d. A connection example of the node 211c held between the open portions 217, 218 is shown in Fig. 13. In Fig. 13, the power lines 204 (204A, 204B), 205 (205A, 205B) are disposed using a flexible flat cable 241, and the power lines 204, 205 and the node 211c are piercing-connected by pierce terminals 242, 243 (For piercing connection, see Japanese Patent Laid-Open No. 2004-221044). The power line 204 has an open portion 244 in the left of the connection portion by the pierce terminal 242 (the side connected to the circuit protection portions 208A, 208B), while the power line 205 has an open portion 245 in the right of the connection portion by the pierce terminal 243 (the side connected to the circuit protection portions 209A, 209B). By using the flexible flat cable for the power lines 204, 205, the open portions 244, 245 can be easily formed by punching or the like. The open portion 244 in Fig. 13 corresponds to the open portion 217 in Fig. 12 and the open portion 245 in Fig. 13 to the open portion 218 in Fig. 12, respectively.

Operation of the power feed system for a vehicle constructed as above will be described below. When both the two lines of the power lines 204A, 205A are ground-faulting at the point 215 due to an accident of the vehicle or the like, both the circuit protection portions 208A, 208B are operated and power feed in the direction of the ground fault point 215 is shut off. As a result, power feed to both the nodes 211a, 211b is stopped, and the load controlled by the nodes 211a, 211b becomes non-operable. On the other hand, in the case of this embodiment where ground fault occurs at the ground fault point 215, since the circuit protection portions 209A, 209B are not operated, the power feed to the node 211d is continued. Also, at the node 211c, though the power feed from the power supply 203 via the power line 205B is stopped by operation of the circuit protection portion 208B, the power feed from the power supply 202 via the power line 204B is continued. As a result, the power feed to the nodes 211c, 211d is continued, and the load controlled by the nodes 211c, 211d are both operable.

In the fifteenth mode, the case of ground fault at the ground fault point 215 located between the node 211a and the node 211b was described, but it also applies to the case of a ground fault between the circuit protection portions 208A, 208B and the node 211a.

In the above fifteenth mode, if both the two power lines are ground-faulting between the circuit protection portions 209A, 209B and the node 211d and the circuit protection portions 209A, 209B are operated, power feed to the node 211d is stopped. On the other hand, power feed to the node 211c from the power supply 202 via the power line 204B is stopped due to the operation of the circuit protection portion 209A, but the power feed from the power supply 203 via the power line 205A is continued.

As described in the fifteenth mode, according to the power feed system for a vehicle of the present invention, even if both the two lines are ground-faulting at an arbitrary point of the power line and the circuit protection portion is operated, not all the power feed to the loads is stopped but the power feed to a part of the loads is continued. Particularly, to the node held between the open portions provided at the two power lines one each, the power feed is maintained even if both the two lines are ground-faulting at an arbitrary point of the power line. Therefore, by allocating a load having an important function, for example, to the node held between the open portions, stability of the system can be drastically improved.

If only one of the two power lines is stopped, it is needless to say that the power feed to all the nodes is ensured.

A sixteenth mode of the power feed system for a vehicle of the present invention is characterized in that the power line in a section held between the open portions provided at each power line, a protective structure for protecting the power line from a failure such as earth fault is provided.

The sixteenth mode will be described referring to Fig. 14. In the fifteenth mode, there is only one node held between the open portions provided at each of the two power lines. On the other hand, in this embodiment in Fig. 14, two nodes of the node 211b and the node 211c are connected to the power line in the section held between the open portions 217, 218. In this case, if both the two lines are ground-faulting at any portion other than the section held between the open portions 217, 218 and the circuit protection portion is operated, the power feed to both the two nodes in the section held between the open portions 217, 218 as in the fifteenth and the sixteenth modes. On the other hand, if both the two lines are ground-faulting between the node 211b and the node 211c in the section held between the open portions 217, 218, the power feed is stopped both to the nodes 211b, 211c.

Then, by adding a protective structure 216 in the section held between the open portions 217, 218, a failure such as ground fault in the section is avoided. This protective structure 216 is comprised by a cover and a tube made by an insulating material, for example. By this, by allocating the two types of loads having an important functions in the section held between the open portions 217, 218, stability of the system can be drastically improved. It is needless to say that the effect by the sixteenth mode can be similarly achieved if there are three or more nodes, for example, in the section held between the open portions.

A seventeenth mode of the power feed system for a vehicle of the present invention is characterized in that for each node connected to the power line between the open portion provided at one of the power lines and the open portion provided at another line, connection between the power line and each node is made through reverse-current prevention means, while for each node connected to the power line between the power line connection portion to the open portion, connection between the line having the open portion and each node is made through the reverse-current prevention means and the connection to the other line not having the open portion is made not through the reverse-current prevention means.

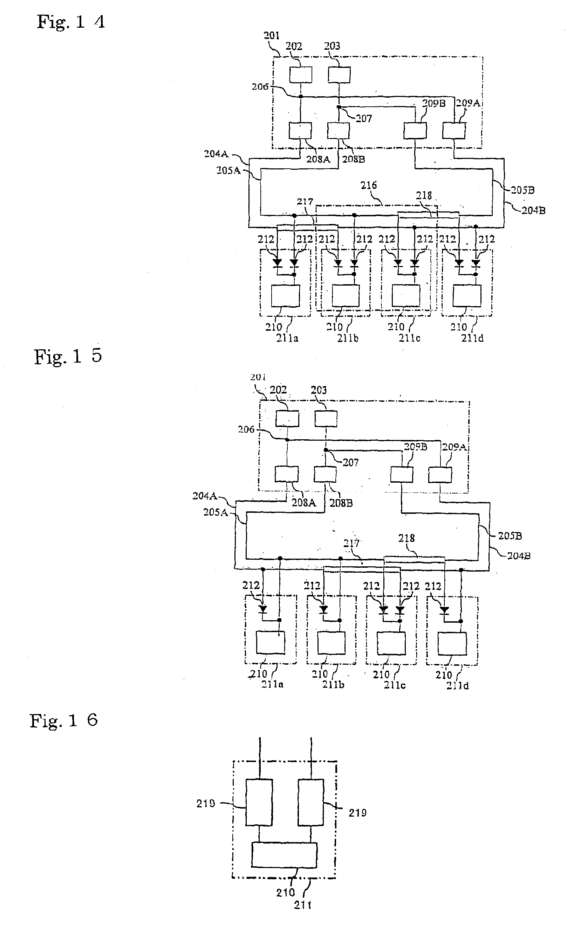

The seventeenth mode of the present invention will be described referring to Fig. 15. The node 211c held between the open portions 217, 218 provided at each of the two power lines 204 (204A and 204B), 205 (205A and 205B) is also connected to both the two power lines 204B, 205A similarly to the 2-6 mode through the diode 212 as the reverse current preventing means. For the nodes 211a, 211b connected in the section up to the first open portion 217 of the power line from the power line connection portions 206, 207 in the counterclockwise direction, the line 24A where the open portion 217 is located and each node is connected through the diode 212, while the connection between the other line 205A and each node is not through the diode 212.

Similarly, for the node 211d connected in the section up to the first open portion 218 of the power line from the connection portions 206, 207 between the power supply and the power line in the clockwise direction, the line 205B where the open portion 218 is located is connected to the node 211d through the diode 212, while the connection between the other line 204B and the node 211d is not through the diode 212.

In the seventeenth mode of the power feed system for a vehicle constructed as above, the number of diodes 12 is drastically reduced as compared with that in the fifteenth mode. For example, 8 diodes in the fifteenth mode (Fig. 12) are reduced to 5 diodes in the seventeenth mode (Fig. 15). In the seventeenth mode, the operation when both the two lines are ground-faulting at an arbitrary point of the power line is the same as that of the fifteenth mode, and if the line to which a load is connected without a diode is ground-faulting, the operation is the same as that of the ground fault of both the two lines, even if it is the ground fault of only one line. However, since the number of diodes can be drastically reduced, not only costs can be reduced but an installation space is drastically reduced, which is a great advantage as the power feed system for a vehicle whose installation space is limited.

An eighteenth mode of the power feed system for a vehicle of the present invention is characterized in that it is applied to a communication system circuit by having an upper level controller in place of the plurality of power supplies and to have a loop-state signal line connected to the load controller of each node in place of the loop-state power line. The power line for feeding power to a load is explained in the tenth to the seventeenth modes mentioned above, the power feed system for a vehicle according to the present invention can be also applied to a communication system circuit.

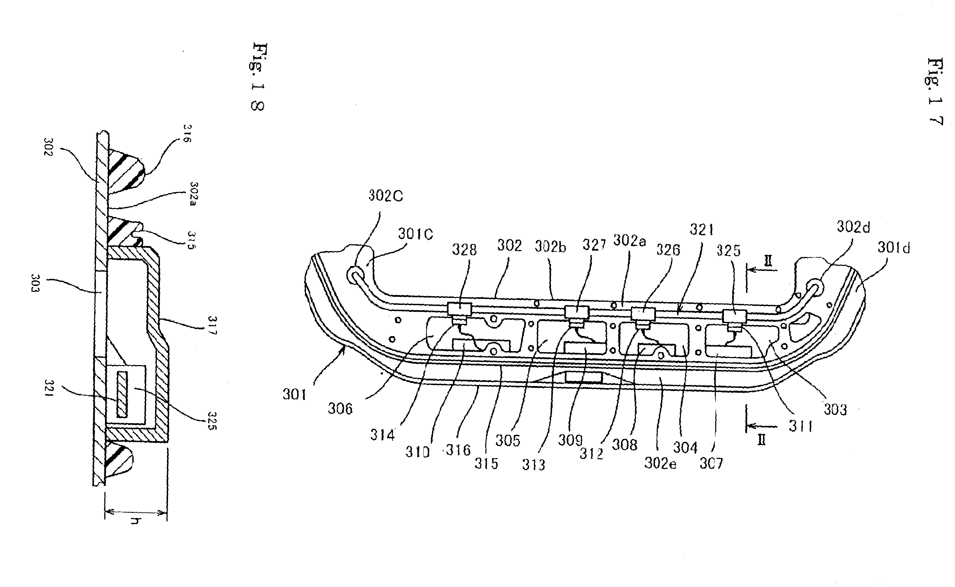

The eighteenth mode will be described referring to Fig. 16. Fig. 16 shows an example of the communication system circuit at the node 211, and reference numeral 219 is a communication portion connected to the communication line. The communication portion 219 comprises a transmitting portion and a receiving portion (both not shown). The transmitting portion changes the communication line to a voltage level corresponding to the logic of a transmission signal. Specifically, it is comprised using a transistor circuit and the like. The receiving portion reads out the logic of the signal from the voltage level of the communication line. Specifically, it is comprised using a comparator circuit and the like.

The description in this embodiment illustrates an example of the power feed system for a vehicle according to the present invention and is not intended to be limiting. Detailed construction, operation and the like of the power feed system for a vehicle in this embodiment can be changed as appropriate in a range not departing from the gist of the present invention.

Next, an embodiment of the power feed system for a vehicle of this invention will be described in detail referring to the accompanying drawing focusing on a wiring body with connector used in practice of this invention.

A nineteenth mode of the power feed system for a vehicle of this invention is characterized in that the node comprises an electronic-part incorporated connector in which an electronic part for drive-controlling a plurality of electric devices attached to a car body or a door is incorporated, and the power line and the multiplex transmission line comprise a communication bus harness having a plurality of conductors, and the electronic-part incorporated connector is provided on the communication bus harness.

A twentieth mode of the power feed system for a vehicle of the present invention is characterized in that the communication bus harness is formed in the flat state.

A twenty first mode of the power feed system for a vehicle of the present invention is characterized in that the communication bus harness comprises a flexible flat cable.

Also, a first mode of the wiring body with connector of the present invention is characterized in that an electronic-part incorporated connector in which an electronic part for drive-controlling a plurality of electric devices attached to a car body or a door is incorporated is connected to a communication bus harness having a plurality of conductors and the communication bus harness includes a power line and formed in the flat state.

A second mode of a wiring body with connector of the present invention is characterized in that the electronic-part incorporated connector is connected to the communication bus harness so that it can be fixed to a car body in the vicinity of the vehicle door electric device.

A third mode of a wiring body with connector of the present invention is characterized in that the communication bus harness comprises a flexible flat cable.

A first mode of a wiring structure of a wiring body with connector of the present invention is characterized in that the above-mentioned wiring body with connector is wired to the car body or the door.

A second mode of a wiring structure of a wiring body with connector of the present invention is characterized in that the wiring body with connector is wired in a clearance formed by a door inner panel and a trim of an electric device attachment portion provided at a door of the vehicle.

A third mode of a wiring structure of a wiring body with connector of the present invention is characterized in that the wiring body with connector is wired along a one-side edge portion of an opening for mounting an electric device provided at the door inner panel.

The wiring body with connector in the nineteenth to the twenty first modes of the power feed system for a vehicle of this invention is preferably put into practice in combination with at least either of the above-mentioned first mode of the power feed system for a vehicle of this invention or the tenth mode of the power feed system for a vehicle of this invention from the viewpoint of failsafe and easiness of the system construction.

Fig. 17 shows a partial top view of a state where the wiring body with connector to be attached in a rear door is wired in a door inner panel, in which a plurality of, four openings 303, 304, 305, 306 and the like, for example, are provided along the car width direction on an upper face 302a of the door inner panel 302 of a rear door 301, and actuators as electric devices such as a wiper motor 307, a door lock actuator 308, an E latch 309, a closer motor 310 and the like are attached in these openings 303 to 306. At each lead wire of these actuators 307 to 310, connectors 311 to 314 are provided.

A communication bus harness 321 as a main line is wired along the longitudinal direction (car width direction) between an edge portion 302b on the rear window side of the top face 302a of the door inner panel 302 and one side edge portions of the openings 303 to 306, inserted from wiring holes 302c, 302d having the horizontal both ends provided at horizontal both sides of the rear panel 302 through right and left door pillars 301c, 301d and connected to an electronic control device (ECU) (not shown) provided on the car body side.

This communication bus harness 321 comprises three conductive bands provided in parallel inside a single band-state flat harness coated by an insulating body. More specifically, it is a flexible flat cable in which 3-core flat copper conductor with the thickness of 0.15 mm and the width of 2.5 mm insulated by a polyethylene terephthalate film and is made as a 3-core of a power line 322, an earth line 323 and a control signal line 324 as shown in Fig. 19, which corresponds to the fifth mode of the power feed system for a vehicle of this invention. In this communication bus harness 321, electronic-part incorporated connectors 325 to 328 for controlling each of the actuators 307 to 310 are provided at the position of each of the openings 303 to 306 and connected and fixed to the power line 322, the earth line 323 and the control signal line 324. These electronic-part incorporated connectors 325 to 328 are fixed to the upper face 302a of the door inner panel 302 by an adhesive sheet or clamp.

The above-mentioned communication bus harness 321 may be constructed such that four conductive bands provided parallel in a band-state flat harness and coated by an insulating body so as to correspond to the first mode of the power feed system for a vehicle of this invention. In this case, the power line 322 corresponds to the power line 1 shown in Fig. 1, the earth line 323 is omitted in Fig. 1, and a line corresponding to the control signal line 324 is provided in two and they correspond to the multiplex transmission line 2 and the diagnostic signal line 3 shown in Fig. 1. Also, since it is not necessary to increase the current capacity of the line corresponding to the multiplex transmission line 2 and the diagnostic signal line 3 as the power line 322 and the earth line 323, the conductor of the line corresponding to the multiplex transmission line 2 and the diagnostic signal line 3 may be thinned so that the width of the communication bus harness becomes substantially the same width as that of the communication bus harness 321 shown in Fig. 19.

Then, the connectors 311 to 314 of the actuators 307 to 310 corresponding to these electronic-part incorporated connectors 325 to 328 are fitted and connected. In this case, since the electronic-part incorporated connectors 325 to 328 are in the standby state for the connectors 311 to 314 of the actuators 307 to 310 side, the connectors 311 to 314 withdrawn from the openings 303 to 306 can be easily fitted with one hand. Also, weather strips 315, 316 are provided on the edge portion 302e side of the upper face 302a of the door inner panel 302.

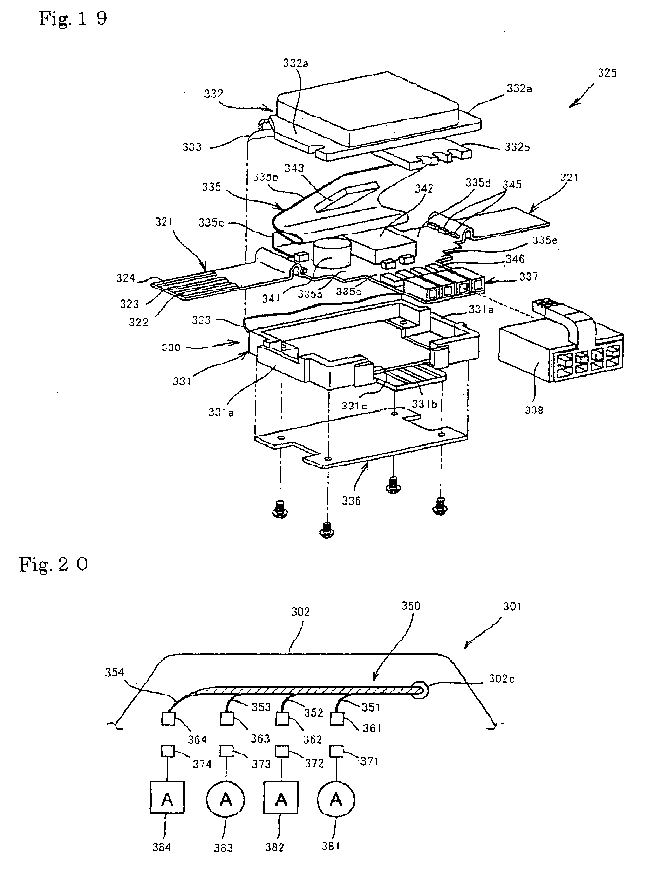

Fig. 18 shows a sectional view along the arrow II-II in Fig. 17 in the state where an existing trim 317 covers the door inner panel in Fig. 17, and the electronic-part incorporated connector 325 connected to the communication bus harness 321 can be accommodated in a clearance between the existing trim 317 and the upper face 302a of the door inner panel 302. Actually, the height h of the clearance between the trim 317 and the upper face 302a of the door inner panel 302 is approximately 15 mm in many cases, and the height of the electronic-part incorporated connectors 325 to 328 is designed so as to be able to be accommodated in this space.

Since in the recent rear door wiring harness, the harness diameter might reach approximately 18 mm, it is difficult to wire a conventional harness in such a clearance. However, according to the wiring body with connector of this embodiment, there is no need of labor to examine a limited clearance between the trim and the door inner panel in advance and to find a wiring path or there is no need to specifically machine the door inner panel or the trim in compliance with the harness diameter as before, and a simple and easy wiring structure can be provided.

Also, in this embodiment, a flexible flat cable is used as the communication bus harness 321, but as a wiring material in place of the flexible flat cable, a flat cable, a ribbon wire or the like in the flat state and coated with resin extrusion capable of being accommodated in a limited clearance between the door inner panel 302 and the trim 317. However, in the case of a distributed control harness with the extremely small number of cores as the communication bus harness 321 of this embodiment, it is extremely susceptible to an external force such as tension and hook at wiring, fixing work of the harness and fitting work or the like of a connector, and a special protective measure such as a protector, a protective tube or the like is needed. Thus, it is preferable to use a flexible flat cable having coating which can relatively withstand the external force.

Next, the structure of the electronic-part incorporated connector 325 will be described. Fig. 19 shows an exploded perspective view of the electronic-part incorporated connector 325 shown in Fig. 17. The electronic-part incorporated connector 325 has a flexible printed wiring board (FPC) (hereinafter referred to as "printed wiring board") 335, a heat sink 336, a female terminal 337 and the like in a case 330 made of a lower case 331 and an upper case 332. In the case 330, the upper end of one side wall of the lower case 331 and the lower end of the corresponding side wall of the upper case 332 are consecutively provided by a thin portion 333 to form a hinge portion (hereinafter referred to as "hinge portion 333") and can be opened/closed by the hinge portion 333. In Fig. 19, the upper case 332 is drawn as being separated from the lower case 331 at the hinge portion 333. The bottom portion of the lower case 331 is opened and the heat sink 336 is fixed by screws at four corners.

The lower case 331, the upper case 332 are formed with projecting edge portions 331a, 332a opposed at both sides in the longitudinal direction, and by fitting detachably, an introduction portion to be a clearance to which the communication bus harness 321 is introduced is formed between them. Also, approximately at the center of the side wall opposite to the side wall on which the hinge portion 333 of the lower case 331 is provided is notched to have an opening portion 331c, and a protective flange 331b projecting slightly diagonally downward and outward is provided at its lower edge portion. A protective flange 332b corresponding to the protective flange 331b is provided at the corresponding side wall of the upper case 332. This case 330 is formed by a resin material such as polyethylene, for example, having insulation properties.

On the printed wiring board 335, an electric circuit pattern corresponding to the actuators to be controlled is formed, and a power IC 341, a control IC 342 and other electronic part 343 and the like are implemented. The printed wiring board 335 is in the shape that a lower face 335a and an upper face 335b are folded and stacked several times at a side portion 335c on the hinge portion 333 side, and both sides along the communication bus harness 321 are made as the wire connection portion 335d and the side portion corresponding to the opening 331c as a terminal connection portion 335e. At a line connection portion 335d, a power line, an earth line and a control signal line are provided corresponding to the power line 322, the earth line 323, the control signal line 324 of the communication bus harness 321, and a connection circuit pattern corresponding to an actuator to be controlled (both not shown) is formed at the terminal connection portion 335e. If the communication bus harness 321 has a multiplex transmission line and a diagnostic signal line in place of the control signal line 324, connection circuit patterns or the like (not shown) corresponding to the line connection portion 335d and the terminal connection portion 335c are formed, respectively.

This printed wiring board 335 is mounted on the communication bus harness 321 as shown, and the power line, the earth line and the control signal line of the line connection portion 335d on both sides are electrically connected and fixed by the piercing connection portion 345 to the power line 322, the earth line 323 and the control signal line 324 of the communication bus harness 321, respectively. To the connection terminal portion 335e, a female terminal 337 fitted in the male terminal of the connector 311 on the actuator 37 side is connected by a piercing connection portion 346. In this way, by the piercing connection, the connection portion is not large as conventional press-fit connection, but it has an advantage that the connector itself can be made thinner.

The connection terminal portion 335e is introduced from the opening portion 331c of the lower case 331 and loaded on a protective flange 331b. The communication bus harness 321 is loaded on the heat sink 336 at a portion corresponding to the lower face 335a of the printed wiring board 335 and adhesively fixed, and the upper face 335b of the printed wiring board 335 is adhesively fixed to the back face of the upper case 332. Also, the communication bus harness 321 is bent in the inverted U-shaped state at the outer side of the connection terminal portion 335d to have an excess portion, held and fixed between the upper and the lower projecting edge portions 331a, 332a when fixed by a locking portion, not shown by closing the upper case 332, and after the female terminal 337 is held between the upper and the lower protective flanges 331b, 332b, a female terminal cover 338 is externally fitted and attached.

The electronic-part incorporated connector 325 is constructed as above. By this, the incorporated electronic circuits are protected. And the female connector comprises the female terminal 337 and the female terminal cover 338, and the connector 311 of the actuator 307 is fitted and connected. It also applies to the other electronic-part incorporated connectors 326 to 328.

In this embodiment, the communication bus harness 321 is constructed so that the electronic-circuit incorporated connectors 325 to 328 corresponding to the connection position of each of the actuators 307 to 310 are connected using a single long harness along the entire length in the car width direction on the upper face 302a of the door inner panel 302, but not limited to this, but it may be the length per section of the electronic-circuit incorporated connectors 325 to 328 connected to the actuators 307 to 310 to enable relay by these electronic-circuit incorporated connectors 325 to 328.

Also, in the above-mentioned embodiments, the present invention was described for the case applied to a rear door of a vehicle, but not limited to this, it is needless to say that the present invention may be applied to wiring of other doors such as a side door of a vehicle or wiring inside the car body.

## Claims

1. A power feed system for a vehicle provided with a plurality of nodes provided with a load control portion for controlling an electric load disposed at each portion of a vehicle, respectively, a power line for supplying power to each node, and a multiplex transmission line connecting each node to each other, comprising an abnormal current detection portion disposed in a line for receiving power feed from the power line at each node for detecting abnormality of a load current, a detection signal generation portion that starts to receive power when abnormality is detected at the abnormal current detection portion and sends a weak current as an output signal, a diagnostic signal line in common to each node, connected to the detection signal generation portion for transmitting the signal from the detection signal generation portion, and a switching portion for switching the power feed from the power line to the load control portion or the detection signal generation portion.

2. The power feed system for a vehicle according to claim 1, wherein the switching portion provided at each node is connected to the detection signal generation portion side when the load of the node is not operated.

3. The power feed system for a vehicle according to claim 1 or 2, wherein the detection signal generation portion provided at each node comprises resistors with the size different for each node and a value of an output signal sent from the detection signal generation portion is in the size different for each node.

4. The power feed system for a vehicle according to claim 1 or 2, wherein the detection signal generation portion provided at each node sets the size of a resistor of the detection signal generation portion so that a value of an output signal sent from the detection signal generation portion becomes a predetermined size determined in advance for each node.

5. The power feed system for a vehicle according to claim 1 or 2, wherein the detection signal generation portion provided at each node is connected to an existing multiplex transmission line.

6. The power feed system for a vehicle according to claim 1 or 2, further comprising a display portion connected to the diagnostic signal line for displaying a signal transmitted from the detection signal generation portion of each node.

7. The power feed system for a vehicle according to claim 1 or 2, further comprising an abnormal node determination portion connected to the diagnostic signal line for determining an abnormal node based on a signal transmitted from the detection signal generation portion of each node.

8. The power feed system for a vehicle according to claim 1 or 2, further comprising a node connection diagnosis portion connected to the diagnostic signal line for diagnosing connection state between each node and the power line at battery connection or engine start based on a signal transmitted from the detection signal generation portion.

9. The power feed system for a vehicle according to claim 1 or 2, further comprising a load monitor portion connected to the diagnostic signal line for monitoring whether a load of each node is operating or not at a normal time based on a signal transmitted from the detection signal generation portion.

10. The power feed system for a vehicle according to claim 1, wherein a plurality of power supply systems, a plurality of nodes provided with a load controller for controlling an electric load disposed at each location of a vehicle, respectively, and a loop-state power line connected to each system of the plurality of power supply systems are provided, wherein each of the plurality of power supply systems and the loop state power lines are connected at a power line connection portion and the loop state power line has a circuit protection portion between the power line connection portion and the node.

11. The power feed system for a vehicle according to claim 10, wherein the circuit protection portion has circuit shut-off means provided with a self-recovery function, a contact connected in series with the circuit shut-off means, and contact holding means connected in parallel with the circuit shut-off means and the contact for open-holding the contact.

12. The power feed system for a vehicle according to claim 10, wherein the circuit protection portion has circuit shut-off means provided with a self-recovery function, a first contact connected in series with the circuit shut-off means, a backup power line branched on the downstream side of the circuit shut-off means for supplying power to the load side, a second contact provided on the backup power line, and contact holding means connected in parallel with the circuit shut-off means and the contact for open-holding the first contact and closed-holding the second contact.

13. The power feed system for a vehicle according to claim 11 or 12, wherein the circuit protection portion further has abnormality warning means for notifying that an abnormal current is generated in the circuit shut-off means.

14. The power feed system for a vehicle according to claim 11 or 12, wherein the circuit protection portion further has recovery means for recovering operation of the circuit protection portion to a state before occurrence of the abnormal current after the cause of occurrence of the abnormal current is removed.

15. The power feed system for a vehicle according to claim 10, wherein at the loop state power line, open portions are formed at both sides with one or more adjoining nodes connected to the power line between them for each line.

16. The power feed system for a vehicle according to claim 15, wherein the power line in a section held by the open portions provided at each power line, a protective structure for protecting the power line from a failure such as earth fault is provided.

17. The power feed system for a vehicle according to claim 15 or 16, wherein for each node connected to the power line between the open portion provided at one of the power lines and the open portion provided at another line, connection between the power line and each node is made through reverse-current prevention means, while for each node connected to the power line between the power line connection portion and the open portion, connection between the line having the open portion and each node is made through the reverse-current prevention means and the connection between the other line not having the open portion and each node is made not through the reverse-current prevention means.

18. The power feed system for a vehicle according to claim 10, 15 or 16, wherein the system is applied to a communication system circuit by having an upper level controller in place of the plurality of power supplies and to have a loop-state signal line connected to the load controller of each node in place of the loop-state power line.

19. The power feed system for a vehicle according to claim 1, wherein the node comprises an electronic-part incorporated connector in which an electronic part for drive-controlling a plurality of electric devices attached to a car body or a door is incorporated, and the power line and the multiplex transmission line comprise a communication bus harness having a plurality of conductors, and the electronic-part incorporated connector is provided on the communication bus harness.

20. The power feed system for a vehicle according to claim 19, wherein the communication bus harness is formed in the flat state.

21. The power feed system for a vehicle according to claim 19, wherein the communication bus harness comprises a flexible flat cable.

22. A wiring body with connector **characterized in that** an electronic-part incorporated connector in which an electronic part for drive-controlling a plurality of electric devices attached to a car body or a door is incorporated is connected to a communication bus harness having a plurality of conductors and the communication bus harness includes a power line and formed in the flat state.

23. The wiring body with connector according to claim 22, wherein the electronic-part incorporated connector is connected to the communication bus harness so that it can be fixed to a car body in the vicinity of the vehicle door electric device.

24. The wiring body with connector according to claim 22 or 23, wherein the communication bus harness comprises a flexible flat cable.

25. A wiring structure of a wiring body with connector for wiring a wiring body with connector in which an electronic-part incorporated connector in which an electronic part for drive-controlling a plurality of electric devices attached to a car body or a door of a vehicle is incorporated is connected to a communication bus harness to the car body or the door,
wherein the wiring body with connector is a wiring body with connector described in any one of claims 22 to 24.

26. The wiring structure of the wiring body with connector according to claims 25, wherein the wiring body with connector is wired in a clearance formed by a door inner panel and a trim of an electric device attachment portion provided at a door of the vehicle.

27. The wiring structure of the wiring body with connector according to claim 26, wherein the wiring body with connector is wired along a one-side edge portion of an opening for mounting an electric device provided at the door inner panel.
